(19) **Europäisches Patentamt**

**European Patent Office**

**Office européen des brevets**

(11) **EP 0 737 721 B1**

(12) **FASCICULE DE BREVET EUROPEEN**

(45) Date de publication et mention
de la délivrance du brevet:
**31.03.2004 Bulletin 2004/14**

(51) Int Cl.7: **C08L 83/07**

(21) Numéro de dépôt: **96420120.6**

(22) Date de dépôt: **12.04.1996**

(54) **Composition silicone réticulable en gel adhésif**

Vernetzbare Siloxanzusammensetzung für Haftgel

Crosslinkable siloxane composition for adhesive gel

(84) Etats contractants désignés:
**AT BE CH DE DK ES FI FR GB GR IE IT LI LU NL PT SE**

(30) Priorité: **14.04.1995 FR 9504760**

(43) Date de publication de la demande:
**16.10.1996 Bulletin 1996/42**

(73) Titulaire: **RHODIA CHIMIE**
**92408 Courbevoie Cédex (FR)**

(72) Inventeurs:
• **Peccoux, Pierre Michel**
**69003 Lyon (FR)**

• **Pusineri, Christian**
**69360 Serezin-du-Rhone (FR)**

(74) Mandataire: **Trolliet, Maurice et al**
**Rhodia Services,**
**Direction de la Propriété Industrielle,**
**40, rue de la Haie-Coq**
**93306 Aubervilliers Cedex (FR)**

(56) Documents cités:
EP-A- 0 069 451      EP-A- 0 240 162
EP-A- 0 322 118      US-A- 4 529 789
US-A- 4 709 001      US-A- 5 239 035
US-A- 5 371 163

**Description**

Le domaine de la présente invention est celui des compositions à base de polyorganosiloxanes (POS) aptes à réticuler par des réactions d'addition ou d'hydrosilylation, faisant intervenir des substituants hydrogènes et des radicaux éthyléniquement insaturés, c'est-à-dire des alcényles en particulier du type vinyle. L'hydrosilylation est généralement catalysée par des composés métalliques, par exemple de nature platinique.

La présente invention concerne plus précisément des compositions silicones réticulables en gel adhésif par hydrosilylation, à température ambiante.

La présente invention a également pour objet les gels issus de la réticulation des susdites compositions.

Au sens de la présente invention, le terme gel silicone désigne un produit silicone réticulé caractérisé par un taux de pénétration compris par exemple entre 100 et 500 dixièmes de mm (mesure par pénétrométrie **ASTM D 217**).

L'invention vise enfin les systèmes précurseurs stockables de tels gels silicones.

Ces gels mi-solides mi-liquides sont traditionnellement utilisés pour la protection de matériels électroniques sensibles aux vibrations, aux chocs, à la température et de manière plus générale aux agressions physiques et chimiques de l'atmosphère ambiante. Pour leur mise en oeuvre dans cette application, les gels silicones encapsulent les composants électroniques ("Potting") et on exploite, notamment, leurs propriétés amortissantes et diélectriques, leur caractère isolant et leur aptitude à l'évacuation de chaleur. Il est également vivement souhaitable que ces gels aient un certain pouvoir d'adhésion vis-à-vis des supports comprenant les éléments sensibles à protéger et/ou vis à vis des éléments eux-mêmes. L'adhésion constitue en effet une garantie d'efficacité du "potting", puisqu'elle permet de parfaire l'isolation par rapport au milieu extérieur agressif. Une autre spécification attendue pour les gels silicones est une grande vitesse de réticulation eu égard aux impératifs de rentabilité et de faisabilité industrielle ainsi que de facilité d'emploi. Enfin, compte tenu des conditions extrêmes, notamment de température, auxquelles peuvent être exposés les gels silicones dans cette application, il est requis que ces gels conservent leurs propriétés physicochimiques, en particulier leur texture de gel avec toutes les propriétés de viscoélasticité qui s'y attachent, à des très basses températures (- 60 ° C).

Hormis cette application d'encapsulation et de protection d'éléments électroniques sensibles, les gels silicones sont susceptibles d'être utilisés également :

- comme adhésif, pour autant que leurs propriétés adhérentes soient significatives,
- comme matériau amortisseur de choc,
- comme matériau médical de base, notamment pour l'élaboration de prothèses, implants
- ou bien encore comme ciment d'assemblage ou comme mastic d'étanchéification, entre autres.

Comme cela est divulgué dans le brevet **US N° 4 072 635,** les gels silicones sont classiquement constitués par le produit d'une réaction d'hydrosilylation intervenant dans un mélange comprenant essentiellement :

- un polyorganosiloxane ayant une viscosité de 10 à 10.000 centistokes à 25 °C et formé par un copolymère comportant des unités ou motifs siloxyles terminaux M = $R_2 ViSiO_{1/2}$, des motifs D = $R_2 SiO_{2/2}$, et $RViSiO_{2/2}$ ainsi que des motifs siloxyles **T** (topiques de résines silicones) = $RSiO_{3/2}$, avec R correspondant à un méthyle (Me) ou un phényle (Phe) et Vi représentant un radical vinyle ;
- un polyhydrogénoorganosiloxane liquide de formule $XRMeSiO(R_2SiO)_x$—$(RHSiO)_m$ SiMe RX avec R tel que défini ci-dessus et X correspondant à H ou R,
- et un catalyseur à base de platine.

Ce brevet US relie l'acquisition d'une vitesse de réticulation correcte, à la présence de fonctionnalités vinyles (Fonctions réactives d'hydrosilylation), aux extrémités du POS non hydrogéné.

Les gels obtenus à partir de ces POS vinyles en bout de chaîne et dans la chaîne et de POS hydrogénés également en bout de chaîne et dans la chaîne, ont des vitesses de réticulation honorables, mais qui ne sauraient masquer les carences desdits gels au regard des propriétés élastiques, de la stabilité de ces propriétés élastiques dans le temps et à basse température, et de la faible auto-adhérence avérée de ces gels.

On connaît également par la demande de brevet européen **N° 69 451,** des gels silicones POS pour lesquels l'application visée est l'encapsulation d'ensembles électroniques ("Potting"). L'objectif sous-tendant l'invention objet de cette demande de brevet est essentiellement de fournir des gels silicones diélectriques, possédant des propriétés de stabilité physique à basse température et qui sont obtenues à l'issue d'une réticulation rapide à température ambiante ou à plus haute température. Pour atteindre cet objectif, les inventeurs proposent donc une composition polyorganosiloxane réticulable formée par un mélange intime des produits suivants :

- un polyorganosiloxane comprenant de 80 à 96,5 % molaires de motifs siloxyles D = $(CH_3)_2$ SiO, 2 à 10 % molaire, de motifs siloxyles T = $CH_3SiO_{3/2}$, 1,25 à 6 % molaire de motifs siloxyles M terminaux = $(CH_3)_3 SiO_{1/2}$ et 0,25 à 4 % molaire de motifs siloxyles terminaux M = $(CH_3)_2 (CH_2=CH) SiO_{1/2}$;

- et un polyorganosiloxane hydrogéné n'ayant pas plus d'un atome d'hydrogène par silicium et substitué par des radicaux alkyles de type méthyle ou par des restes phényles ou 3,3,3-trifluoropropyle,

le ratio SiH/SiVi étant compris entre 0,2 et 5,

- et un catalyseur à base de platine.

Il est à noter que ce document antérieur souligne le caractère essentiel des motifs siloxyles de type T = Me $SiO_{3/2}$, quant aux propriétés de stabilité à basse température du gel. Par ailleurs, ce document n'évoque nullement d'éventuelles propriétés adhésives des gels silicones préparés à partir de ces compositions connues. En définitive, cette proposition de l'art antérieur s'est avérée être insuffisamment satisfaisante pour répondre aux spécifications cumulées de stabilité physique, de capacité d'amortissement et de haute vitesse de réticulation. Elle n'apporte en outre, aucune réponse, en ce qui concerne l'auto-adhérence.

La quête d'une autoadhérence pour les gels silicones n'a elle non plus pas été le moteur de l'invention décrite dans la demande de brevet européen **N° 532 362.** Les compositions de gel silicone décrites dans cette dernière comportent :

A - un polyorganosiloxane comprenant de 90 à 97 % molaire de motifs D = $R(CH_3)SiO_{2/2}$, 0,1 à 2,5 % molaire de motifs T = R $SiO_{3/2}$, et 0,1 à 4 % molaire de motifs terminaux M = $(CH_3R) Si_{1/2}$ avec R = méthyle, phényle ou $CF_3CH_2CH_2$-, et avec la condition selon laquelle ces deux derniers groupements R représentent 0,5 à 10 % molaire du total des groupements R,

B - un polyhydrogénoorganosiloxane comprenant au moins un SiH par molécule et déterminant un ratio SiH/SiVi compris entre 0,5 et 1,5, et

C - un catalyseur à base de platine.

Le POS B hydrogéné peut être constitué par un POS du type poly(diméthylsiloxy)$\alpha$, $\omega$(diméthylhydrogénosiloxy) et éventuellement par un POS du type poly (diméthylsiloxy) (méthylhydrogénosiloxy)$\alpha$,$\omega$(diméthylhydrogénosiloxy). Dans cette demande, seuls sont exemplifiés les mélanges, d'une part, de POS $\alpha$,$\omega$-vinylé et phényle substitués, et d'autre part de POS hydrogénés dans les chaînes et aux extrémités de celles-ci. La viscosité des POS A mis en oeuvre est de l'ordre de 1000 mPa.s, tandis que celle des POS B utilisées pour la préparation des gels, est de l'ordre de 100 mPa.s. La présence de motifs **T** (résine) présentés comme promoteurs de stabilité physique des gels à basse température, est une des caractéristiques essentielles de cette proposition technique antérieure. Enfin, il est à souligner qu'il n'est nullement fait allusion à de quelconques propriétés adhésives des gels considérés.

On connaît également au travers du brevet **US N° 5 371 163,** des compositions silicones ayant une basse viscosité, réticulable en gel et comprenant les composés suivants :

- un POS A de type SiVi (pdms $\alpha\omega$-vinylé)
- un POS B allongeur de type SiH ou POS $\alpha$,$\omega$ $(CH3)_2$ HSiO
- un POS C réticulant de type SiH (voire SiVi)
- un catalyseur d'hydrosilylation (Pt)

avec la condition selon laquelle le nombre d'atomes d'hydrogènes liés au silicium représente plus que 80 % en nombre des atomes d'hydrogènes et des radicaux vinyles présent dans l'allongeur B et le réticulant C (SiH(B)/SiH(B) + SiH (C)) et le ratio molaire SiH (B) / SiVi (A) est compris entre 0,8 et 1,2.

Cette composition se caractérise par une prédominance SiH(B) / SiH (B) + SiH (C) > 80 % en nombre de l'allongeur, en ce qui concerne la fourniture de fonctions réactives d'hydrosilylation du type hydrogéno (complémentaires aux vinyles du composé A). De plus, il est à noter que le ratio SiH de l'allongeur / SiVi du POS de base est relativement élevé. Ces caractéristiques structurelles sont peut-être, au moins en partie, responsables des performances moyennes de cette composition et des gels en émanant, s'agissant des propriétés d'amortissement, de stabilité physique à basse et à haute température, de vitesse de réticulation et des caractéristiques diélectriques. En outre, les compositions ne permettent pas d'obtenir des gels adhérents.

On peut signaler enfin la demande de brevet japonais **JP n° 06/016942** qui décrit une composition silicone réticulable en gel, et comprenant un POS de type SiVi, un POS de type SiH, un additif promoteur d'adhérence de type silane (alcoxysilane monocarboxylé) et un catalyseur à base de platine. Le ratio SiH / SiVi de cette composition est de 0,2 - 0,3. Il est fait état dans cette demande de présumées propriétés adhésives, qui ne semblent pas étayées. En outre, la présence du silane promoteur d'adhérence peut avoir des répercussions néfastes sur les autres propriétés du gel obtenu par réticulation de cette composition.

La demande de brevet européen EP322 118 décrit une composition polyorganosiloxane réticulable en gel, utilisable pour la fabrication de prothèses médicales et pour l'encapsulation de composants électroniques ("potting "). Le brevet américain US 4 709 001 décrit une composition polyorganosiloxane réticulable (par hydrosilylation) en gel et utilisable dans le " potting " de composants électroniques. La demande de brevet européen EP 240 162 décrit une composition polyorganosiloxane liquide et réticulable (par hydrosilylation) utilisable en optique comme matériau transparent susceptible de former des guides d'onde optique compressible. Le brevet américain US 4 529 789 décrit des compositions polyorganosiloxanes réticulables en gel par hydrosilylation, transparent et utilisable comme guide d'onde optique, sensible à la pression (compressible).

Dans cet état de connaissance, l'un des objectifs essentiel de la présente invention est de fournir des compositions silicones réticulables en gel par hydrosilylation, lesdites compositions se devant de conduire à des gels silicones doués pour le moins des qualités attendues dans les produits de l'art antérieur à savoir : amortissement, vitesse rapide de réticulation, stabilité physique du gel à basse température et faisabilité industrielle. Ces qualités recherchées dans le cadre de l'invention se doivent en outre d'être meilleures que celles obtenues jusqu'alors. Enfin et surtout, on vise à atteindre des gels silicones présentant des propriétés d'adhérence (d'auto-adhérence) améliorées, lesquelles sont particulièrement souhaitables notamment dans les applications des gels pour la protection d'unités électroniques sensibles mais également dans les applications médicales et paramédicales, pour ne citer qu'elles.

La Demanderesse a mis en oeuvre d'importants moyens de recherche et de nombreuses expérimentations pour atteindre cet objectif parmi d'autres. Et au terme de cela, elle a eu le mérite de trouver, de manière tout-à-fait surprenante et inattendue, qu'il convient d'introduire dans des conditions quantitatives soigneusement et judicieusement choisies, un polyorganosiloxane hydrogéné particulier dans les compositions silicones précurseurs des gels. Ce POS hydrogéné particulier est en fait un additif fonctionnel parfaitement compatible avec les autres POS de la composition (contrairement aux promoteurs d'adhérence qui entrainent des pertubations). Cet additif joue le rôle d'un allongeur, qui a pour effet présumé d'augmenter la taille des mailles du réseau au cours de la réticulation.

Un autre objectif incident de l'invention est de fournir une composition silicone précurseur de gel adhésif, qui soit simple à préparer, économique, stable au stockage, et qui soit aisé à utiliser pour l'utilisateur final, qui applique la composition juste avant qu'elle se transforme en gel in situ.

Un autre objectif incident de l'invention est de fournir un système précurseur de gel silicone adhésif, à base de la composition du type de celle décrite ci-dessus; ledit système se devant d'être une forme stable au stockage et facile à manipuler et à utiliser pour la préparation du gel.

Un autre objectif incident de l'invention est de fournir des applications de la composition ci-dessus et du gel dont elle peut être à l'origine,

- à titre de moyens d'encapsulation et de protection d'unités électroniques ("Potting" i.e. immersion ou bien encore revêtement ou gainage).
- à titre de matériaux médicaux utiles, par exemple, pour la fabrication d'implants, de prothèses, de ciment d'assemblage..... ou bien encore pour la fabrication d'articles orthopédiques ou paramédicaux,
- à titre de mortier et/ou de mastic d'étanchéification,
- et enfin à titre d'adhésif.

Tous ces objectifs, parmi d'autres, sont atteints par la présente invention qui concerne, en premier chef, une composition silicone réticulable en gel adhésif par hydrosilylation comme définie dans la revendication 1.

La mise en oeuvre de ces POS spécifiquement sélectionnés permet d'obtenir des gels silicones aux propriétés améliorées, dont certaines vont être énoncées ci-après.

Tout d'abord la vitesse de réticulation de ces gels est élevée, ce qui répond aux exigences de faisabilité et de rentabilité industrielle, notamment de l'application "Potting" de composants électroniques sensibles.

De plus, les propriétés viscoélastiques des gels préparés à partir des compositions selon l'invention correspondent bien à l'état mi-solide/mi-liquide recherché. Cet état est propre à procurer des qualités d'amortissement idoines, qui permettent une parfaite absorption des chocs et des vibrations.

Les gels obtenus ont, en outre, l'avantage d'être stables, quelles que soient les conditions extérieures notamment de température. En particulier, ils résistent bien aux basses températures, ces dernières n'affectant pas leur texture de gel.

Il est à souligner que ces qualités sont acquises aux compositions et aux gels selon l'invention, nonobstant la non-présence obligatoire de POS comprenant des motifs T, ce qui va à l'encontre de l'enseignement de l'art antérieur.

Enfin et surtout, l'un des grands intérêts des compositions de l'invention est qu'elles conduisent à des gels silicones adhérents ou auto-adhérents. Cela s'exprime par le fait que leur adhérence, notamment vis-à-vis de supports époxyde et aluminium, est amplifiée par rapport aux gels connus. Sans vouloir être lié par la théorie, cette exacerbation des propriétés d'adhérence semble pouvoir être reliée à la présence de l'allongeur (**III**) dans la composition considérée.

Cet allongeur (**III**) qui ne comprend des **Frh** qu'à ses extrémités a vocation à réagir avec les **Frh$_c$** (complémentaires) appartenant au POS (**I**). En fait, l'allongeur (**III**) entraîne une augmentation des mailles de réseau de réticulation en se liant ainsi au POS (**I**). Ce faisant, l'allongeur (**III**) est à l'origine d'une augmentation du module élastique et du module de dissipation du gel, dont la tangente δ est, par ailleurs, amenée à une valeur sensiblement égale à 1.

In fine, l'adhérence du gel sur de nombreux supports est significativement accrue. Cette performance est à tel point notable que dans le cadre d'un type donné de test de pelage, pour l'évaluation de l'adhésion, on assiste non plus à une rupture dite adhésive se produisant à l'interface comme pour les gels connus, mais à une rupture, dite "cohésive", intervenant, au sein même du gel. Ceci est particulièrement révélateur des qualités adhérentes des gels selon l'invention.

Il est important de noter que ce gain d'adhésion ne se fait pas au détriment des autres propriétés des compositions et des gels de l'invention. En particulier, la tenue thermique des gels n'en souffre pas, à l'inverse de ce qui se produit dans certains gels silicones adhérents, qui comprennent un ou des promoteurs d'adhérence pour l'acquisition de cette propriété.

Outre la présence de l'allongeur (**III**) et le respect de ratios r$_1$ spécifiques, l'invention repose également sur le choix de composants POS particuliers et sur certaines options quantitatives quant auxdits composants, entre autres.

Ainsi, le POS (**I**) peut être considéré comme le composant "structurant" ou comme la base de la composition. Il est avantageusement prépondérant.

Les fonctions réactives d'hydrosilylation (**Frh**) qu'il comprend sont d'un seul type soit hydrogène, soit alcényle, sachant que parmi les alcényles, les vinyles sont celles qui sont le plus couramment retenues. Elles réagissent très bien avec l'hydrogène selon un mécanisme d'addition.

Le POS(**I**) ne présente pas de **Frh** au sein de sa chaîne, mais seulement à ces extrémités.

Conformément à un mode préféré de réalisation de l'invention, les POS (**I**) ont des Frh = Vi.

En pratique, les POS (**I**) plus volontiers mis en oeuvre sont des polydiméthylsiloxanes α,ω (diméthyvinylsiloxy) pour le mode préféré.

De tels POS (**I**) sont disponibles dans le commerce (e.g. RHODORSIL® 621 V de la Société RHONE POULENC).

S'agissant du POS (**II**), il peut être assimilé au réticulant de la composition et comporte un seul type de **Frh** réparties dans les chaînes et aux extrémités de celles-ci (dans ce cas u = 1 dans les motifs porteurs de **Frh** et s ≥ 1, de préférence s = 1, dans les motifs M).

Les **Frh** du POS (**II**) sont l'hydrogène et on les trouve à la fois dans les chaînes et à leurs extrémités.

On a, de préférence, deux types différents de motifs D dans les POS (**II**), mais il n'est pas exclu d'en avoir autant que le permettent les combinaisons u et v de la formule donnée supra pour les motifs D du POS (**II**).

A titre d'exemples de POS (**II**), on peut citer :

- le poly(diméthylsiloxy) (siloxyméthylhydrogéno) α,ω (diméthylhydrogénosiloxy)

$$\underbrace{\qquad}_{D_1} \qquad \underbrace{\qquad}_{D_2} \qquad \underbrace{\qquad}_{M}$$

pour le mode préféré.

Ces POS (**II**) sont des produits commerciaux comme par exemple le RHODORSIL® 626 V 300 H1,7 de RHONE POULENC, et sont largement divulgués tant en ce qui concerne leurs structures que leurs synthèses dans la littérature technique.

Les **Frh** de chacun des POS (**I**), (**II**) et (**III**) sont identiques entre elles et les **Frh** du POS (**I**) sont différentes de celles des POS (**II**) et (**III**) [**Frh** complémentaires **Frh$_c$**].

L'allongeur (**III**) est un polyorganosiloxane (POS) ne présentant des **Frh** que sur ces motifs siloxyles M terminaux. Il est, de préférence, de viscosité beaucoup plus faible que le POS (**I**), par exemple de l'ordre de celle du POS (**II**).

Les **Frh** du POS (**III**) sont représentées par l'hydrogène.
Le ratio en nombre

$$r_1 = \frac{\text{SiH du POS (III)}}{\text{SiH du POS (II) + (III)}} \times 100 < 80 \text{ \%,}$$

de préférence ≤ 50 % et plus préférentiellement encore 0,5 % ≤ r$_1$ ≤30 %.
est l'un des paramètres déterminants de la composition de l'invention.

Ce ratio conditionne en effet, l'amplitude de l'augmentation des mailles du réseau de réticulation par le POS (**III**). On tire avantage à ce que ce ratio $r_1$ soit inférieur à 20 % en poids et plus préférentiellement encore soit de l'ordre de $5 \pm 2$ % en poids.

Comme exemple pratique de POS (**III**), on peut mentionner :

- le poly(diméthylsiloxy)$\alpha,\omega$(diméthylhydrogénosiloxy) pour le mode préféré de réalisation.

La structure et le mode de préparation de POS (**III**) susceptible d'être mis en oeuvre dans la composition de l'invention, sont en outre largement illustrés par la littérature technique antérieure.

A titre d'exemple de produit commercial susceptible d'être utilisé comme POS (**III**), on peut citer le RHODORSIL® 620 H2 de la société RHONE POULENC.

Selon une disposition facultative mais néanmoins avantageuse de l'invention, le POS (**I**) est dilué à l'aide d'un POS (**IV**) comportant des motifs **M** et **D**, dans lesquels les substituants $R^6$ et $R^7$ sont, de préférence, de même nature que les substituants R et $R^1$ du POS (**I**). De manière plus préférée encore, $R^6 = R^7 = R = R^1 = CH_3$.

Ce POS (**IV**) est, par exemple, constitué par une huile polydiméthylsiloxane $\alpha,\omega$ (triméthylsiloxy).

Ce genre de POS est parfaitement disponible dans le commerce, par exemple le produit commercialisé par la Société RHONE POULENC sous la dénomination RHODORSIL® 47 V 100. Le choix du diluant POS (**IV**) se fait naturellement en fonction de la nature du POS (**I**) et il est clair que par définition, le POS (**IV**) aura une viscosité moindre que celle du POS (**I**). Ainsi, conformément à une caractéristique préférée de l'invention, la composition comporte au moins un POS (**IV**) de structure essentiellement linéaire et de viscosité dynamique moins élevée que celle du POS (**I**), de préférence au moins 20 fois moins élevée, et plus préférentiellement encore 5 fois moins élevée que celle du POS (**I**).

Il va de soi que les proportions de Frh et $Frh_c$ présentes dans chacun des POS (**I**) à (**III**) de la composition ne sont pas anodines. Il en est donné ci-après une illustration non limitative :

- POS (**I**) : **Frh** = Vi, présent à raison de 0,01 à 10 % en poids de préférence de 0,05 à 1 % en poids et, plus préférentiellement encore, à raison de 0,1 % en poids environ ;
- POS (**II**) : **Frh** = H, présent à raison de 0,01 à 10, de préférence de 0,1 à 1,5 et plus préférentiellement encore à raison de 0,7 % en poids environ ;
- POS (**III**) : **Frh** = H présent à raison de 0,01 à 10, de préférence de 0,05 à 1 et plus préférentiellement encore, à raison de 0,2 % en poids environ.

Le catalyseur (**V**) est un autre élément important de la composition selon l'invention. Il s'agit, de préférence, d'un complexe organométallique du platine ou bien encore de l'un des catalyseurs à base de platine traditionnellement mis en oeuvre pour la catalyse de réactions d'hydrosilylation entre des restes SiH et des restes SiVi. A titre d'exemples, on peut citer le noir de platine, l'acide chloroplatinique, un acide chloroplatinique modifié par un alcool, un complexe de l'acide chloroplatinique avec une oléfine, un aldéhyde, un vinylsiloxane ou un alcool acétylénique, entre autres. Le brevet **US N° 2 823 218** divulgue un catalyseur d'hydrosilylation du type acide chloroplatinique et le brevet **US N° 3 419 593** est relatif à des catalyseurs formés par des complexes d'acide chloroplatinique et d'organosilicone du type vinylsiloxane. Des complexes de platine et d'hydrocarbures utiles comme catalyseur d'hydrosilylation sont divulgués par les brevets **US N° 3 159 601 et 3 159 662.** Le brevet **US N 3 3 723 497** décrit un acétylacétonate de platine et le brevet **US N° 3 220** 972 a pour objet des catalyseurs à base d'alcoolate de platine.

Concernant les quantités catalytiquement efficaces à mettre en oeuvre, il va de soi que l'homme du métier du domaine considéré est parfaitement à même de déterminer la quantité optimale de catalyseur pour promouvoir la réticulation. Cette entité dépend notamment de la nature du catalyseur et des POS en cause. Pour fixer les idées on peut indiquer qu'elle sera comprise entre 0,1 et 40 ppm (e.g. 15 ppm) pour 100 parties en poids de POS (**I**).

Pour poursuivre sur d'autres caractéristiques intéressantes des POS (**I**) à (**IV**), on peut indiquer qu'ils ont avantageusement une structure sensiblement linéaire.

La viscosité des POS de la composition selon l'invention constitue également un paramètre à prendre en considération, notamment au regard de la facilité de manipulation de cette composition et des propriétés viscoélastiques du gel susceptible d'être obtenu par réticulation de cette composition.

A cet égard et conformément à une disposition avantageuse de l'invention, le POS (**I**) est sensiblement linéaire et possède une viscosité dynamique inférieure ou égale à 500 000 m.Pa.s, de préférence, comprise entre 1000 et 200 000 mPa.s ;

et/ou le POS (**II**) est sensiblement linéaire et possède une viscosité dynamique inférieure ou égale à 100 000 m.Pa.s, de préférence à 1000 mPa.s et plus préférentiellement encore comprise entre 10 et 100 mPa.s ;

et/ou le POS (**III**) est sensiblement linéaire et possède une viscosité dynamique inférieure ou égale à 100 000 m.Pa.s, de préférence à 1000 mPa.s et plus préférentiellement encore comprise entre 10 et 100 mPa.s.

Un autre paramètre non sans influence sur les propriétés rhéologiques et d'adhérence du gel silicone adhérent selon l'invention, est constitué par le rapport en nombre :

$$r_2 = \frac{Frh \text{ du POS (II) et du POS (III)}}{Frh_c \text{ du POS (I)}}$$

[$\mathbf{Frh_c}$ = **Frh** complémentaire à, i.e. réactive avec **Frh**]

Les Frh du réticulant (**II**) et de l'allongeur (**III**) d'une part, et, d'autre part, les **Frh** complémentaires du POS (**I**) structurant, sont celles qui sont susceptibles de réagir ensemble pour former un réseau de réticulation et le gel conforme à l'invention.

Ce rapport molaire $\mathbf{r_2}$ est inférieur ou égal à 0,8, de préférence compris entre 0,1 et 0,7 et plus préférentiellement encore entre 0,3 et 0,6.

Dans le cadre du **mode** de réalisation de l'invention

$$\text{le rapport en nombre } r_2 = \frac{Frh = \text{hydrogène (II + III)}}{Frh_c = \text{vinyle (I)}}$$

est inférieur ou égal à 0,8 et plus préférentiellement encore est compris entre 0,4 et 0,55.

En pratique, une composition selon le mode préféré de réalisation de l'invention peut être celle caractérisée en ce que :

- le POS (**I**) comprend des motifs M, à hauteur de 0,2 à 1 % molaire, dans lesquels R = CH$_3$, Frh = vinyle ainsi que des motifs D, à hauteur de 99 à 99,8 % molaire, dans lesquels R$^1$ = CH$_3$;
- le POS (**II**) comprend des motifs M, à hauteur de 1 à 6 % molaire, dans lesquels Frh = H, R$^2$ = CH$_3$, s = 1 et t = 2, et des motifs D, à hauteur de 10 à 50 % molaire, dans lesquels R$^3$ = CH$_3$, Frh = H, u = 1 et v = 1 ;
- le POS (**III**) comprend des motifs M, à hauteur de 8 à 20 % molaire, dans lesquels Frh = H, R$^4$ = CH$_3$ w = 1 et x = 2, et des motifs D, à hauteur de 80 à 92 % molaire, dans lesquels R$^5$ = CH$_3$ ;

et en ce qu'il est prévu un diluant POS (**IV**) dont les motifs M et D comportent respectivement des R$^6$ = R$^7$ = CH$_3$ et sont présents à hauteur d'environ au plus 10 % en mole de motifs M et au moins 90 % en mole de motifs D, le diluant (**IV**) étant, de préférence, présent dans une quantité inférieure ou égale à 50 % en poids, de préférence à 40 % poids et plus préférentiellement encore comprise entre 5 et 20 % poids, par rapport au mélange POS (**I**) + (**IV**).

Pour améliorer la stabilité au stockage de la composition selon l'invention et pour fournir aux utilisateurs une forme commerciale aisément manipulable, il est prévu un système à au moins deux composants A et B comportant les POS (**I**) à (**III**) et éventuellement (**IV**) ainsi que le catalyseur (**V**) de la composition telle que définie ci-dessus, chacun de ces deux composants A et B étant exempt de mélange de POS (**I**) + (**II**) et/ou (**III**) avec du catalyseur (**V**). Ledit catalyseur (**V**) est, de préférence, exclusivement contenu dans l'un des composants A ou B du système.

C'est ainsi que le composant A peut, par exemple, contenir au moins une partie du POS (**I**) et au moins une partie du POS (**IV**) ainsi que le catalyseur (**V**), tandis que le composant B comprend le POS (**II**) et le POS (**III**) et éventuellement la partie restante des POS (**I**) et (**IV**).

Pour simplifier l'utilisation, il est préférable de proposer un système bi-composant dont les proportions A : B sont comprises entre 40 : 60 et 60 : 40, et, de préférence, sont, de 50 : 50 parties en poids environ.

S'agissant de la préparation du gel, on peut préciser que la réticulation de la composition en gel intervient à la température ambiante ou après chauffage à des températures comprises entre 100 et 180° C par exemple. Dans ce contexte, les durées de réticulation nécessaires sont, par exemple, comprises entre quelques mn et 1 heure 30 mn.

Le gel adhésif réticulé obtenu à partir de la composition décrite ci-dessus forme un objet à part entière de la présente invention.

S'agissant des applications, la composition et le gel selon l'invention peuvent être utilisés comme moyens amortisseurs de choc et de protection de composants électroniques ou analogues ("Potting"). La composition et/ou le gel peuvent ainsi être versés dans un conteneur comprenant des éléments électroniques sensibles montés sur un support quelconque, par exemple en résine époxy. Il s'agit en fait d'une immersion des éléments fragiles dans la composition silicone.

La composition et le gel peuvent également encapsuler des composés électroniques sensibles en vue de les protéger par d'autres moyens e.g. : gainage de revêtement...

Compte tenu de ces propriétés adhésives particulièrement significatives, le gel silicone selon l'invention peut aussi être avantageusement utilisé pour la préparation :

- d'adhésifs,
- ou de matériau médical, de préférence du type de ceux entrant dans la constitution des implants, prothèses, ciments ou analogues ;
- ou de produits d'étanchéification, de mastics, de composition de scellage ou produits d'assemblage.

La présente invention concerne également, à titre de produits nouveaux les adhésifs, les matériaux médicaux, et les moyens amortisseurs de choc et de protection, les ciments, mastics ou étanchéificateurs réalisés à partir de ce gel silicone.

Dans ces applications, il est loisible d'exploiter tout ou partie des propriétés avantageuses du gel et de la composition selon l'invention : grande vitesse de réticulation, stabilité physique (viscoélasticité) à basse et à haute température, propriétés d'amortissement, qualité d'isolant notamment par rapport à l'air et à l'eau notamment, et enfin et surtout propriétés adhésives.

Les exemples non limitatifs qui suivent, montrent diverses possibilités de formulation des compositions selon l'invention ainsi que les caractéristiques et les propriétés des gels silicones obtenus par réticulation desdites compositions.

**EXEMPLES :**

**EXEMPLE 1 :**

Les compositions décrites se présentent sous forme bicomposante et la réticulation s'effectue après mélange de deux parties nommées A et B dans un rapport 50 /50.

Descriptif :

① → La liste ci-dessous décrit les matières premières utilisées dans les compositions des parties A et B de ce gel.
② → Le tableau 1 décrit les concentrations de chacun de ces constituants dans les parties A et B.
③ → Méthodologie d'obtention des gels.
④ → Le tableau 2 présente les propriétés physiques obtenues sur ces compositions et particulièrement l'influence de l'huile (**III**) (= huile poly(diméthylsiloxy)$\alpha,\omega$-(diméthylhydrogénosiloxy) de viscosité 20 mPa.s et contenant 0,2 % de groupements H), sur les propriétés d'adhérence des compositions sur époxyde et aluminium.

① → Liste des matières premières utilisées :

- POS (**I**) = huile polydiméthylsiloxane $\alpha,\omega$ (diméthylvinylsiloxy) de viscosité 60 000 mPa.s contenant environ 0,1 % en poids de groupements ($CH_2$ = CH).
- POS (**II**) = huile poly(diméthylsiloxy) (méthylhydrogénosiloxy) $\alpha,\omega$ diméthylhydrogénosiloxy de viscosité 25 mPa.s et contenant 0,7 % en poids de groupements H.
- POS (**III**) = huile poly(diméthylsiloxy) $\alpha,\omega$ (diméthylhydrogénosiloxy) de viscosité 20 mPa.s et contenant 0,2 % en poids de groupements H.
- POS (**IV**) = huile polydiméthylsiloxane $\alpha,\omega$ (triméthylsiloxy) de viscosité 100 mPa.s.
- Catalyseur (**V**) = complexe organométallique du platine utilisé comme catalyseur de réticulation ; les concentrations de ce catalyseur sont données en ppm de Pt métal de degré d'oxydation = 0.

② → Tableau 1 = constitution des compositions testées :

## TABLEAU 1

| composition | partie A | partie B | | |
|---|---|---|---|---|
| Référence | A1 | B1 | B2 | B3 |
| constituants | concentration % | | | |
| POS (I) | 50 | 49,1 | 49,1 | 49,1 |
| POS (IV) | 50 | 50 | 50 | 50 |
| POS (II) | - | 0,9 | 0,855 | 0,81 |
| POS (III) | - | 0 | 0,045 | 0,09 |
| Catalyseur (V) | 15 ppm Pt | - | - | - |

$$r_1 = \frac{SiH \ du \ POS \ (III)}{SiH \ du \ POS \ (II) + (III)} \times 100$$

est égal à 5,8 % pour l'essai 2 et à 11,4 % pour l'essai 3.

Le rapport $r_2$ [H] (II + III)/ [Vi] (I) est égal à 0,51 ; 0,52 ; 0,53, respectivement pour les essais 1 à 3.

→ Méthodologie :

Les gels sont préparés par simple mélange des constituants des compositions, dans un réacteur agité et placé à 25 °C.

④ → Tableau 2 : propriétés physiques et d'adhérence des gels obtenus :

## TABLEAU 2

| ESSAIS | 1 | 2 | 3 |
|---|---|---|---|
| réticulation | A1 + B1 | A1 + B2 | A1 + B3 |
| Propriétés | | | |
| module visqueux G", Pa | 2707 | 2207 | 2107 |
| module élastique G', Pa | 3857 | 2607 | 2438 |
| tangente delta | 0,71 | 0,85 | 0,86 |
| ADHESION sur EPOXYDE | | | |
| force de pelage, N/mm | 0,06 | 0,16 | 0,17 |
| type de rupture | adhésive | cohésive | cohésive |
| ADHESION sur ALUMINIUM | | | |
| force de pelage, N/mm | 0,067 | 0,176 | - |
| type de rupture | adhésive | cohésive | - |

Par rupture **adhésive,** on entend une désolidarisation (ou déchirure) qui se propage entre la couche de gel et le support.

Par rupture **cohésive,** on entend une désolidarisation (ou déchirure) qui se propage au sein de la couche de gel ; la surface du support étant au moins en partie recouverte de résidus de gel.

L'essai 1 issu du mélange de la partie A1 et de la partie B1 ne contient pas d'huile (**III**) c'est l'essai témoin.

Les essais 2 et 3 issus des mélanges de la partie A1 et des parties B2 et B3 contiennent respectivement des quantités croissantes d'huile (**III**).

Les propriétés viscoélastiques G' et G" ont été mesurées sur un rhéomètre à contrainte imposée CARRI-MED CS 100 dans les conditions suivantes :

- Température = 23° C ;
- Dimension du cône = diamètre : 2 cm, angle = 4 degrés ;
- Balayage de fréquence = de 0,5 à 10 hertz ;
- Couple = 500 $\mu$N.m.

L'adhérence a été mesurée sur un dynamomètre ADAMEL LHOMARGY DY 30 par la méthode de pelage à 90 degrés sur des éprouvettes de dimension 200 mm x 50 mm x 25 mm préalablement nettoyées au trichloro-éthane.

Ces résultats montrent que l'introduction d'une huile poly(diméthylsiloxy) $\alpha,\omega$ (diméthylhydrogénosiloxy) améliore l'adhésion sur époxyde et aluminium des compositions.

**EXEMPLE 2 :**

Descriptif :

① → La liste ci-dessous décrit les matières premières utilisées dans les compositions des parties A et B de ce gel.

② → Le tableau 3 décrit les concentrations de chacun de ces constituants dans les parties A et B.

③ → Méthodologie

④ → Le tableau 4 présente les propriétés d'adhésion de ces compositions et particulièrement l'influence de l'huile (**III**) (= huile poly(diméthylsiloxy) $\alpha,\omega$ (diméthylhydrogénosiloxy) de viscosité 20 mPa.s et contenant 0,2 % de groupements H), sur support époxyde.

① → **Liste des matières premières utilisées** :

- POS (**I**) = huile polydiméthylsiloxane $\alpha,\omega$ (diméthylvinylsiloxy) de viscosité 60 000 mPa.s contenant environ 0,1 % de groupements ($CH_2$ = CH),
- POS (**II**) = huile poly(diméthylsiloxy) (méthylhydrogénosiloxy)$\alpha,\omega$ diméthylhydrogénosiloxy de viscosité 25mPa.s et contenant 0,7 % de groupements H,
- POS (**III**) = huile poly(diméthylsiloxy) $\alpha,\omega$(diméthylhydrogénosiloxy) de viscosité 20 mPa.s et contenant 0,2 % de groupements H,
- Catalyseur (V) = complexe organométallique du platine utilisé comme catalyseur de réticulation ; les concentrations de ce catalyseur sont données en ppm de Pt métal.

② → <u>Tableau</u> : constitution des compositions testées :

**TABLEAU 3**

| Composition | partie A | partie B | |
|---|---|---|---|
| Référence | A2 | B4 | B5 |
| Constituants | concentration, % | | |
| (I) | 100 | 98,2 | 98,2 |
| (II) | - | 1,8 | 1,71 |
| (III) | - | 0 | 0,09 |
| (V) | 15 ppm Pt | - | - |

☞

$$r_1 = \frac{SiH \ de \ (III)}{SiH \ de \ (II) + (III)} \times 100 = 5,8 \ \%.$$

☞ Le rapport $r_2$ [H](**II + III**) /[Vi] (**I**) est égal à 0,5 pour chacune des compositions.

L'essai 4 issu du mélange de la partie A2 et de la partie B4 ne contient par d'huile (**III**) c'est l'essai témoin.

L'essai 5 issu du mélange de la partie A2 et de la partie B4 contient de l'huile (**III**).

→ Méthodologie :

Les gels sont préparés par simple mélange des constituants des compositions, dans un réacteur agité et placé à 25 °C.

Les propriétés d'adhérence (force de pelage) ont été mesurées dans les conditions décrites dans l'exemple 1.

④ → Tableau 4 : propriétés d'adhérence des compositions testées :

**TABLEAU 4**

| ESSAIS | 4 | 5 |
|---|---|---|
| réticulation | A2 + B4 | A2 + B5 |
| ADHESION sur EPOXYDE force de pelage, N/mm type de rupture | 0,06 adhésive | 0,35 cohésive |

Ces résultats montrent également que l'introduction d'une huile (**III**) poly(diméthylsiloxy) $\alpha,\omega$ (diméthylhydrogénosiloxy) améliore l'adhésion sur époxyde des compositions.

**EXEMPLE 3 : INCIDENCE DE LA CONCENTRATION EN POS (III) ALLONGEUR DANS LA COMPOSITION**

Descriptif :

①  → La liste ci-dessous décrit les matières premières mises en oeuvre.
②  → Formulations testées.
③  → Méthodologie de préparation et de test.
④  → Résultats : influence de la concentration en POS (**III**) allongeur sur les propriétés physiques (rhéologiques) et d'adhérence des gels silicones testés.

①  → Liste des matières premières utilisées :

- POS (**I**) : huile polydiméthylsiloxane $\alpha,\omega$ (diméthylvinylsiloxy) de viscosité 60 000 mPa.s contenant environ 0,1 % poids de Vi (RHODORSIL® 621 V 60 000)
- POS (**II**) : huile réticulante poly(diméthylsiloxy) (méthylhydrogénosiloxy)$\alpha,\omega$ diméthylhydrogénosiloxy de viscosité 300 mPa.s et contenant environ 0,17 % poids de groupements H, (RHODORSIL® 626 V 300 H 1,7)
- POS (**III**) : allongeur huile poly(diméthylsiloxy) $\alpha,\omega$(diméthylhydrogénosiloxy) de viscosité 20 mPa.s et contenant 0,2 % en poids de groupements H, (RHODORSIL® 620 H2)
- POS (**IV**) : diluant = huile polydiméthylsiloxane $\alpha,\omega$(triméthylsiloxy) de viscosité de 100 mPa.s (RHODORSIL® 47 V 100).

②  → Formulations : Tableau 5 (en bicomposant A et B 50/50).

## TABLEAU 5

| DILUTION 50 % | | A | B6 | B7 | B8 | B9 |
|---|---|---|---|---|---|---|
| POS (I) | | 50 | 49,1 | 49,1 | 49,1 | 49,1 |
| POS (IV) | | 50 | 50 | 50 | 50 | 50 |
| POS (II) | | - | 0,9 | 0,855 | 0,80 | 0,72 |
| POS (III) | | - | - | 0,045 | 0,09 | 0,018 |
| Catalyseur (V) | | 15 ppm Pt | - | - | - | - |
| $r_1 = \dfrac{SiH\ (III)}{SiH\ (III) + SiH\ (II)} \times 100\ (\%)$ | | - | 0 | 5,8 | 10,1 | 22,8 |
| DILUTION 30 % | | A | B10 | B11 | B12 | B13 |
| POS (I) | | 70 | 67,8 | 67,8 | 67,8 | 67,8 |
| POS (IV) | | 30 | 30 | 30 | 30 | 30 |
| POS (II) | | - | 1,2 | 1,14 | 1,08 | 1,00 |
| POS (III) | | - | - | 0,06 | 0,12 | 0,20 |
| Catalyseur (V) | | 15 ppm Pt | - | - | - | - |
| $r_1 = \dfrac{SiH\ (III)}{SiH\ (II) + SiH\ (III)} \times 100\ (\%)$ | | - | 0 | 5,8 | 10,1 | 22,8 |

③ → <u>Méthodologie de préparation et de test</u> : idem exemples 1 et 2
④ → Résultats : Tableau 6

Catalyseur (V) = complexe organométallique du platine utilisé comme catalyseur de réticulation ; les concentrations de ce catalyseur sont données en ppm de Pt métal.
Les résultats sont présentés dans le tableau 6 ci-après; les essais ont été réalisés pour deux dilutions : 30 et 50 % d'huile POS (IV).
L'huile POS (III) a pour effet d'allonger les mailles du réseau. Cela entraîne les variations suivantes :

*propriétés rhéologiques :*

Le module élastique G' diminue sensiblement dès addition de 5 % d'huile 620 H2 ; au dela, la variation est moins sensible ; Le module visqueux G" reste constant. Par conséquent, les valeurs de tangente δ augmentent avec une première variation importante dès additions d'huile (III).

*propriétés d'adhérence :*

L'effet de l'huile (III) sur les propriétés d'adhérence est significatif ; outre l'augmentation des forces de pelage, les ruptures passent d'une nature adhésive à une nature cohésive dès addition d'huile (III).

## TABLEAU 6

| INFLUENCE de l'huile POS (III) "allongeante" | | | |
|---|---|---|---|
| DILUTION POS (IV) = 30 % poids par rapport à POS (I) + (II) | | | |
| $r_1$ | 0 | 5,8 | 10,1 | 22,8 |
| *Propriétés rhéologiques* | | | |
| G', Pa | 8 860 | 6 572 | 6 335 | 5 900 |
| G'', Pa | 4 928 | 4 713 | 4 720 | 4 677 |
| tangente DELTA | 0,57 | 0,72 | 0,75 | 0,8 |
| *Propriétés d'adhérence* | | | |
| Pelage sur époxyde, N/mm rupture | 0,07 adhésive | 0,2 cohésive | 0,23 cohésive | 0,23 cohésive |
| DILUTION POS (IV) = 50 % poids par rapport à POS (I) + (II) | | | |
| $r_1$ | 0 | 5,8 | 10,1 | 22,8 |
| *Propriétés rhéologiques* | | | |
| G', Pa | 3 857 | 2 607 | 2 438 | 2 594 |
| G'', Pa | 2 707 | 2 207 | 2 107 | 2 303 |
| tangente DELTA | 0,71 | 0,85 | 0,86 | 0,89 |
| *Propriétés d'adhérence* | | | |
| Pelage sur époxyde, N /mm rupture | 0,06 adhésive | 0,16 cohésive | 0,17 cohésive | 0,15 cohésive |

**Revendications**

1. Composition silicone réticulable en gel adhésif par hydrosilylation, **caractérisée en ce qu'**elle consiste essentiellement en :

(I) au moins un polyorganosiloxane POS (I) comprenant :

a) des motifs siloxyles terminaux de type M de formule :

$$(R)_2 \, (\text{Frh}) \, SiO_{1/2}$$

dans laquelle les groupements R, identiques ou différents entre eux, sont des groupements alkyles linéaires ou ramifiés en $C_1$-$C_6$ et/ou aryles substitués ou non et le groupement **Frh** correspond à une Fonction réactive d'hydrosilylation correspondant à un alcényl et
b) des motifs siloxyles de type D, identiques ou différents, de formule:

$$(R^1)_2 \, Si \, O_{2/2}$$

dans laquelle $R^1$ a la même définition que R ;

(**II**) au moins un polyorganosiloxane POS (**II**) comprenant :

a) des motifs siloxyles terminaux de type M de formule:

$$(\textbf{Frh})_s \, (R^2)_t \, Si \, O_{1/2}$$

dans laquelle le groupement **Frh** correspond à l'hydrogène, $R^2$ a la même définition que R, s est choisi parmi les valeurs 1, 2 et 3, t est choisi parmi les valeurs 0, 1 et 2 et la somme s+ t est égale à 3 ; et

b) des motifs siloxyles de type **D**, identiques ou différents, de formule :

$$(Frh)_u \, (R^3)_v \, Si \, O_{2/2}$$

dans laquelle le groupement **Frh** correspond à l'hydrogène, $R^3$ a la même définition que R, u est choisi parmi les valeurs 0 et 1, v est choisi parmi les valeurs 1 et 2 et la somme u+v est égale à 2, avec comme conditions qu'au moins l'un des motifs D du POS (**II**) est porteur d'un groupement **Frh** (u = 1 et v = 1) ;

(**III**) au moins un polyorganosiloxane POS (**III**) qualifié "d'allongeur" comportant :

a) des motifs siloxyles de type **D** de formule :

$$(R^5)_2 \, SiO_{2/2}$$

dans laquelle $R^5$ a la même définition que R ; et

b) des motifs siloxyles terminaux de type **M** de formule :

$$(\textbf{Frh})_w \, (R^4)_x \, Si \, O_{1/2}$$

dans laquelle le groupement **Frh** correspond à l'hydrogène, $R^4$ a la même définition que R, w est choisi parmi les valeurs 1, 2 et 3, x est choisi parmi les valeurs 0, 1 et 2 et la some w+x est égale à 3 ;

(**IV**) éventuellement au moins un polyorganosiloxane POS (**IV**) utile notamment comme diluant du POS (**I**) et comportant des motifs siloxyles terminaux de type **M** de formule $(R^6)_3 SiO_{1/2}$ et des motifs siloxyles de type **D** de formule $(R^7)_2 \, SiO_{2/2}$ dans lesquelles $R^6$ et $R^7$, identiques ou différents entre eux, ont la même définition que R ; et

(**V**) une quantité efficace de catalyseur (**V**) d'hydrosilylation, de préférence de nature platinique ; lesdits polyorganosiloxanes POS(**I**), POS (**II**) et POS (**III**) étant choisis de manière à ce que :

a) le ratio $r_1$ de formule :

$$\frac{\text{nombre de Frh du POS (III)}}{\text{nombre de Frh du POS (II) + POS (III)}} \times 100$$

soit inférieur à 80 %, de préférence inférieur ou égal à 50 % et plus préférentiellement compris entre 0,5 et 30 %, et

b) le ratio $r_2$ de formule:

$$r_2 = \frac{\text{nombre de Frn du POS (II) et du POS (III)}}{\text{nombre de Frh du POS (I)}}$$

soit inférieur ou égal à 0,8, de préférence compris entre 0,1 et 0,7 et plus préférentiellement compris entre 0,3 et 0,6.

2.  Composition selon la revendication 1 dans laquelle :

    - le POS (**I**) est linéaire et possède une viscosité dynamique inférieure ou égale à 500 000 m.Pa.s, de préférence, comprise entre 1000 et 200 000 mPa.s ;
    - le POS (**II**) est linéaire et possède une viscosité dynamique inférieure ou égale à 100 000 m.Pa.s, de préférence inférieure ou égale à 1000 mPa.s et plus préférentiellement comprise entre 10 et 100 mPa.s ; et/ou
    - le POS (**III**) est linéaire et possède une viscosité dynamique inférieure ou égale à 100000 m.Pa.s, de préférence inférieure ou égale à 1000 mPa.s et plus préférentiellement comprise entre 10 et 100 mPa.s.

3.  Composition selon l'une quelconque des revendications 1 à 2 comportant au moins un POS (**IV**), de structure linéaire et de viscosité dynamique moins élevée que celle du POS (**I**) et de préférence 5 fois moins élevée que celle du POS (**I**).

4.  Composition selon l'une quelconque des revendications 1 à 3 dans laquelle :

    - le POS (**I**) comprend lesdits motifs de type M présent à hauteur de 0,2 à 1 % en mole, dans lesquels le groupement R est un méthyle et le groupement Frh est un vinyle et lesdits motifs de type **D** présent à hauteur de 99 à 99,8 % en mole, dans lesquels $R^1$ est un $CH_3$, p est égal à 2 et q est égal à 0 ;
    - le POS (**II**) comprend lesdits motifs de type **M**, à hauteur de 1 à 6 % en mole, $R^2$ est un $CH_3$, s est égal à 1 et t est égal à 2, et lesdits motifs de type **D**, à hauteur de 10 à 50 % en mole, dans lesquels $R^3$ est un $CH_3$, u est égal à 1 et v est égal à 1 ;
    - le POS (**III**) comprend lesdits motifs de type **M**, à hauteur de 8 à 20 % en mole, $R^4$ est un $CH_3$, w est égal à 1 et x est égal à 2, et lesdits motifs **D**, à hauteur de 80 à 92 % en mole, dans lesquels $R^5$ est un $CH_3$ ; et
    - le diluant POS (**IV**) dont les motifs de type M et **D** comportent respectivement des groupements $R^6$ et $R^7$ qui sont des méthyles et sont présents à hauteur d'au plus 10 % en mole de motifs de type **M** et d'au moins 90 % en mole de motifs de type **D**, le diluant (**IV**) étant, de préférence, présent dans une quantité inférieure ou égale à 50 % en poids, de préférence inférieure ou égale à 40 % en poids et plus préférentiellement comprise entre 5 et 20 % en poids, par rapport au mélange POS (**I**) + (**IV**).

5.  Système à au moins deux composants A et B comportant les POS (**I**) à (**III**), le catalyseur (**V**) et éventuellement le POS (**IV**) de la composition selon l'une quelconque des revendications 1 à4, chacun de ces deux composants A et B étant exempt de mélange de POS (**I**) + [POS (**II**) et/ou POS (**III**)] avec le catalyseur (**V**) , ce dernier étant, de préférence, exclusivement contenu dans l'un des composants A ou B du système.

6.  Gel adhésif réticulé obtenu à partir de la composition selon l'une quelconque des revendications 1 à 4 et/ou du système selon la revendication 5.

7.  Utilisation de la composition selon l'une quelconque des revendications 1 à 4, du système selon la revendication 5 ou du gel selon la revendication 6 pour la préparation :

    - d'adhésifs ;
    - de matériau médical, de préférence du type de ceux entrant dans la constitution des implants, prothèses, ciments ou analogues ;ou
    - de produits d'étanchéification, de mastics, de composition de scellage ou de produits d'assemblage.

**Claims**

1.  Silicone composition which can be crosslinked by hydrosilylation into an adhesive gel, **characterized in that** it essentially comprises:

    (I) at least one polyorganosiloxane POS (I) comprising:

        a) end siloxyl units of type M of formula:

$$(R)_2(\textbf{Hrf})SiO_{1/2}$$

in which the R groups, which are identical to or different from one another, are linear or branched $C_1$-$C_6$ alkyl groups and/or aryl groups which may or may not be substituted and the **Hrf** group corresponds to a **H**ydrosilylation **r**eactive **f**unctional group corresponding to an alkenyl, and
b) identical or different siloxyl units of type D of formula:

$$(R^1)_2SiO_{2/2}$$

in which $R^1$ has the same definition as R;

(II) at least one polyorganosiloxane POS (II) comprising:

a) end siloxyl units of type M of formula:

$$(\textbf{Hrf})_s(R^2)_tSiO_{1/2}$$

in which the **Hrf** group corresponds to hydrogen, $R^2$ has the same definition as R, s is chosen from the values 1, 2 and 3, t is chosen from the values 0, 1 and 2 and the sum s + t is equal to 3; and
b) identical or different siloxyl units of type D of formula:

$$(\textbf{Hrf})_u(R^3)_vSiO_{2/2}$$

in which the **Hrf** group corresponds to hydrogen, $R^3$ has the same definition as R, u is chosen from the values 0 and 1, v is chosen from the values 1 and 2 and the sum u + v is equal to 2, with the condition that at least one of the units D of the POS (II) carries an **Hrf** group (u = 1 and v = 1);

(III) at least one polyorganosiloxane POS (III), described as "extending", comprising:

a) siloxyl units of type D of formula:

$$(R^5)_2SiO_{2/2}$$

in which $R^5$ has the same definition as R; and
b) end siloxyl units of type M of formula:

$$(\textbf{Hrf})_w(R^4)_xSiO_{1/2}$$

in which the **Hrf** group corresponds to hydrogen, $R^4$ has the same definition as R, w is chosen from the values 1, 2 and 3, x is chosen from the values 0, 1 and 2 and the sum w + x is equal to 3;

(IV) optionally at least one polyorganosiloxane POS (IV) of use in particular as diluent of the POS (I) and comprising end siloxyl units of type M of formula $(R^6)_3SiO_{1/2}$ and siloxyl units of type D of formula $(R^7)_2SiO_{2/2}$ in which $R^6$ and $R^7$, which are identical to or different from one another, have the same definition as R; and
(V) an effective amount of hydrosilylation catalyst (V), preferably of platinum nature; the said polyorganosiloxanes POS (I), POS (II) and POS (III) being chosen so that:

a) the ratio $r_1$ of formula:

$$\frac{\text{Hrf number of the POS (III)}}{\text{Hrf number of the POS (II) + POS (III)}} \times 100$$

is less than 80%, preferably less than or equal to 50% and more preferably between 0.5 and 30%, and

b) the ratio $r_2$ of formula:

$$\frac{\text{Hrf number of the POS (II) and of the POS (III)}}{\text{Hrf number of the POS (I)}}$$

is less than or equal to 0.8, preferably between 0.1 and 0.7 and more preferably between 0.3 and 0.6.

2. Composition according to claim 1, in which:

  - the POS (I) is linear and has a dynamic viscosity of less than or equal to 500 000 mPa·s, preferably of between 1 000 and 200 000 mPa·s;
  - the POS (II) is linear and has a dynamic viscosity of less than or equal to 100 000 mPa·s, preferably of less than or equal to 1 000 mPa·s and more preferably of between 10 and 100 mPa·s; and/or
  - the POS (III) is linear and has a dynamic viscosity of less than or equal to 100 000 mPa·s, preferably of less than or equal to 1 000 mPa·s and more preferably of between 10 and 100 mPa·s.

3. Composition according to either one of claims 1 and 2, comprising at least one POS (IV) with a linear structure and with a lower dynamic viscosity than that of the POS (I) and preferably one which is 5 times lower than that of the POS (I).

4. Composition according to any one of claims 1 to 3, in which:

  - the POS (I) comprises the said units of type M, present at a level of 0.2 to 1 mol%, in which the R group is a methyl and the **Hrf** group is a vinyl and the said units of type D, present at a level of 99 to 99.8 mol%, in which $R_1$ is a $CH_3$, p is equal to 2 and q is equal to 0;
  - the POS (II) comprises the said units of type M, at a level of 1 to 6 mol%, in which $R^2$ is a $CH_3$, s is equal to 1 and t is equal to 2 and the said units of type D, at a level of 10 to 50 mol%, in which $R^3$ is a $CH_3$, u is equal to 1 and v is equal to 1;
  - the POS (III) comprises the said units of type M, at a level of 8 to 20 mol%, in which $R^4$ is a $CH_3$, w is equal to 1 and x is equal to 2 and the said units of type D, at a level of 80 to 92 mol%, in which $R^5$ is a $CH_3$; and
  - the diluent POS (IV), the units of type M and D of which respectively comprise $R^6$ and $R^7$ groups which are methyls and are present at a level of at most 10 mol% of units of type M and of at least 90 mol% of units of type D, the diluent (IV) preferably being present in an amount of less than or equal to 50% by weight, preferably of less than or equal to 40% by weight and more preferably of between 5 and 20% by weight, with respect to the POS (I) + (IV) mixture.

5. System with at least two components A and B comprising the POS (I), the POS (II), the POS (III), the catalyst (V) and optionally the POS (IV) of the composition according to any one of claims 1 to 4, each of these two components A and B being devoid of a mixture of POS (I) + [POS (II) and/or POS (III)] with the catalyst (V), the latter preferably being present exclusively in one of the components A or B of the system.

6. Crosslinked adhesive gel obtained from the composition according to any one of claims 1 to 4 and/or from the system according to claim 5.

7. Use of the composition according to any one of claims 1 to 4, of the system according to claim 5 or of the gel according to claim 6 in the preparation:

  - of adhesives;
  - of medical material, preferably of the type of those used in forming implants, prostheses, cements or the like; or
  - leakproofing products, mastics, sealing compositions or assembling products.

**Patentansprüche**

1. Silicon-Zusammensetzung, vernetzbar durch Hydrosilylierung zu einem Haftgel, **dadurch gekennzeichnet, daß** sie im wesentlichen besteht aus:

(I) mindestens einem Polyorganosiloxan POS (I), umfassend:

a) endständige Struktureinheiten Siloxyl vom Typ M der Formel $(R)_2(Frh)SiO_{1/2}$,
in der die Gruppen R, untereinander gleich oder verschieden, lineare oder verzweigte Gruppen Alkyl mit 1 bis 6 Kohlenstoffatomen und/oder substituierte oder unsubstituierte Gruppen Aryl sind und die Gruppe Frh einer reaktiven Funktion der Hydrosilylierung entspricht, die ihrerseits einem Alkenyl entspricht, und
b) gleiche oder verschiedene Struktureinheiten Siloxyl vom Typ D der Formel $(R^1)_2SiO_{2/2}$,
in der $R^1$ die gleiche Definition wie R besitzt;

(II) mindestens einem Polyorganosiloxan POS (II), umfassend:

a) endständige Struktureinheiten Siloxyl vom Typ M der Formel $(Frh)_s(R^2)_tSiO_{1/2}$,
in der die Gruppe Frh Wasserstoff entspricht, $R^2$ die gleiche Definition wie R besitzt, s ausgewählt wird unter den Werten 1, 2 und 3, t ausgewählt wird unter den Werten 0, 1 und 2 und die Summe s + t gleich 3 ist; und
b) gleiche oder verschiedene Struktureinheiten Siloxyl vom Typ D der Formel $(Frh)_u(R^3)_vSiO_{2/2}$,
in der die Gruppe Frh Wasserstoff entspricht, $R^3$ die gleiche Definition wie R besitzt, u ausgewählt wird unter den Werten 0 und 1, v ausgewählt wird unter den Werten 1 und 2 und die Summe u + v gleich 2 ist, unter der Bedingung, daß mindestens eine der Struktureinheiten D des POS (II) Träger einer Gruppe Frh (u = 1 und v = 1) ist;

(III) mindestens einem sogenannten "Verlängerer"-Polyorganosiloxan POS (III), umfassend:

a) Struktureinheiten Siloxyl vom Typ D der Formel $(R^5)_2SiO_{2/2}$,
in der $R^5$ die gleiche Definition wie R besitzt; und
b) endständige Struktureinheiten Siloxyl vom Typ M der Formel $(Frh)_w(R^4)_xSiO_{1/2}$,
in der die Gruppe Frh Wasserstoff entspricht, $R^4$ die gleiche Definition wie R besitzt, w ausgewählt wird unter den Werten 1, 2 und 3, x ausgewählt wird unter den Werten 0, 1 und 2 und die Summe w + x gleich 3 ist;

(IV) gegebenenfalls mindestens einem Polyorganosiloxan POS (IV), das insbesondere als Verdünnungsmittel des POS (I) verwendet wird und das endständige Struktureinheiten Siloxyl vom Typ M der Formel $(R^6)_3SiO_{1/2}$ und Struktureinheiten Siloxyl vom Typ D der Formel $(R^7)_2SiO_{2/2}$ umfaßt, worin $R^6$ und $R^7$, untereinander gleich oder verschieden, die gleiche Definition wie R besitzen; und
(V) einer wirksamen Menge eines Katalysators (V) der Hydrosilylierung, vorzugsweise von Platinbeschaffenheit;

wobei die genannten Polyorganosiloxane POS (I), POS (II) und POS (III) in der Weise ausgewählt werden, daß

a) das Verhältnis $r_1$ der Formel

$$\frac{\text{Anzahl von Frh des POS (III)}}{\text{Anzahl von Frh des POS (II) + POS (III)}} \times 100$$

unter 80 %, vorzugsweise unter oder gleich 50 % und noch bevorzugter zwischen 0,5 und 30 % beträgt, und
b) das Verhältnis $r_2$ der Formel

$$r_2 = \frac{\text{Anzahl von Frh des POS (II) und des POS (III)}}{\text{Anzahl von Frh des POS (I)}}$$

unter oder gleich 0,8, vorzugsweise zwischen 0,1 und 0,7 und noch bevorzugter zwischen 0,3 und 0,6 beträgt.

2. Zusammensetzung nach Anspruch 1, in der

- das POS (I) linear ist und eine dynamische Viskosität von unter oder gleich 500000 mPa.s, vorzugsweise zwischen 1000 und 200000 mPa.s besitzt;
- das POS (II) linear ist und eine dynamische Viskosität von unter oder gleich 100000 mPa.s, vorzugsweise von unter oder gleich 1000 mPa.s und noch bevorzugter zwischen 10 und 100 mPa.s besitzt; und/oder

- das POS (III) linear ist und eine dynamische Viskosität von unter oder gleich 100000 mPa.s, vorzugsweise von unter oder gleich 1000 mPa.s und noch bevorzugter zwischen 10 und 100 mPa.s besitzt.

3. Zusammensetzung nach irgendeinem der Ansprüche 1 bis 2, umfassend mindestens ein POS (IV) mit linearer Struktur und einer dynamischen Viskosität, die weniger hoch ist als die des POS (I) und vorzugsweise fünfmal weniger hoch als die des POS (I).

4. Zusammensetzung nach irgendeinem der Ansprüche 1 bis 3, worin

- das POS (I) umfaßt: die genannten Struktureinheiten vom Typ M, die in einer Höhe von 0,2 bis 1 Mol-% anwesend sind, in denen die Gruppe R ein Methyl ist und die Gruppe Frh ein Vinyl ist, und die genannten Struktureinheiten vom Typ D, die in einer Höhe von 99 bis 99,8 Mol-% anwesend sind, in denen $R^1$ ein $CH_3$ ist, p gleich 2 ist und q gleich 0 ist;
- das POS (II) umfaßt: die genannten Struktureinheiten vom Typ M, in einer Höhe von 1 bis 6 Mol-%, in denen die Gruppe $R^2$ ein $CH_3$ ist, s gleich 1 ist und t gleich 2 ist, und die genannten Struktureinheiten vom Typ D, in einer Höhe von 10 bis 50 Mol-%, in denen $R^3$ ein $CH_3$ ist, u gleich 1 ist und v gleich 1 ist;
- das POS (III) umfaßt: die genannten Struktureinheiten vom Typ M, in einer Höhe von 8 bis 20 Mol-%, in denen die Gruppe $R^4$ ein $CH_3$ ist, w gleich 1 ist und x gleich 2 ist, und die genannten Struktureinheiten vom Typ D, in einer Höhe von 80 bis 92 Mol-%, in denen $R^5$ ein $CH_3$ ist; und
- das Verdünnungsmittel POS (IV), dessen Struktureinheiten vom Typ M und D jeweils Gruppen $R^6$ und $R^7$ umfassen, die Methyle sind, und die in einer Höhe von höchstens 10 Mol-% von Struktureinheiten M und mindestens 90 Mol-% von Struktureinheiten D anwesend sind, wobei das Verdünnungsmittel (IV) vorzugsweise in einer Menge von unterhalb oder gleich 50 Gew.-%, vorzugsweise unterhalb oder gleich 40 Gew.-% und ganz besonders bevorzugt zwischen 5 und 20 Gew.-% vorliegt, bezogen auf die Mischung POS (I) + (IV).

5. System mit mindestens zwei Komponenten A und B, umfassend die POS (I) bis (III), den Katalysator (V) und gegebenenfalls das POS (IV) der Zusammensetzung nach irgendeinem der Ansprüche 1 bis 4, wobei jede dieser zwei Komponenten A und B frei ist von der Mischung POS (I) + [POS (II) und/oder POS (III)] mit dem Katalysator (V), und dieser letztere vorzugsweise ausschließlich in einer der Komponenten A oder B des Systems enthalten ist.

6. Vernetztes Haftgel, erhalten ausgehend von der Zusammensetzung nach irgendeinem der Ansprüche 1 bis 4 und/ oder dem System nach Anspruch 5.

7. Verwendung der Zusammensetzung nach irgendeinem der Ansprüche 1 bis 4, des Systems nach Anspruch 5 oder des Gels nach Anspruch 6 für die Herstellung von:

- Klebstoffen;
- medizinischen Materialien vorzugsweise von der Art, wie sie beim Aufbau von Implantaten, Prothesen, Zementen oder Analogen Eingang finden; oder
- Produkten zum Abdichten, Kitten, Zusammensetzungen zum Versiegeln oder Produkten zur Montage.